# EUROPEAN PATENT APPLICATION

(11) **EP 2 218 570 A1**
(43) Date of publication of application: **18.08.2010**
(21) Application number: 10150993.3
(22) Date of filing: 18.01.2010
(51) Int. Cl.: B29C 51/10, E04D 5/06, E04D 13/03, E04D 13/147

(54) **Roofing components having vacuum-formed thermoset materials and related manufacturing methods**

(30) Priority: 26.01.2009 DK 200900108
(71) Applicant: VKR Holding A/S, 2970 Hørsholm (DK)
(72) Inventor: Ronan, Joseph Jeffrey, Greenwood, SC 29649 (US)

(57) **Abstract**

Methods of vacuum-forming a roofing component of thermoset material includes providing a mold (22) shaped as a roofing component; providing a thermoset material; heating the thermoset material; disposing the thermoset material about the mold; and vacuuming the thermoset material to assume a shape of the mold, the thermoset material being cured during heating.

## Description

### BACKGROUND OF THE DISCLOSURE

Waterproof membranes are used with roofing components to prevent leaks through and around the roofing components. The membranes are connected to the components by fasteners such as screws, nails or the like, either directly through the membrane or more commonly through a stiffener, such as a strip of rigid material.
In order to obtain a waterproof seal between the membrane and a component, a number of closely spaced fasteners typically are utilized.

In addition to having to utilize numerous fasteners, another drawback when installing the membrane onto the component is that the membrane must be held temporarily to the component while the membrane is adjusted, wrinkles and pockets smoothed out, and cuts made for roof openings. After this laborious process, the membrane is fixed to the flashing.

A membrane pre-formed to complement a roofing component would be welcome in the roofing industry to speed construction and installation and reduce costs.

### BRIEF SUMMARY OF THE DISCLOSURE

The present disclosure is directed in general to vacuuming and heat curing a thermoset material in a shape of a roofing component. The components and materials of the embodiments and their equivalents discussed herein are simple and economical to manufacture and use. Other advantages of the disclosure will be apparent from the following description and the attached drawings or can be learned through practice of the following embodiments and their equivalents.

According to one aspect of the present disclosure, a method of vacuum-forming a roofing component of thermoset material includes providing a mold shaped as a roofing component; heating the mold; disposing a thermoset material about the mold; and vacuuming the thermoset material to assume a shape of the mold, the thermoset material being cured by the heated mold. In this aspect, the mold may be male-shaped or female-shaped, and the roofing component may be a skylight, a tube or a flashing component.

Also in this aspect, the mold may be heated to about 300 degrees Fahrenheit to about 350 degrees Fahrenheit. More specifically, the thermoset material may be heated to about 100 degrees Fahrenheit to about 150 degrees Fahrenheit to render the thermoset material pliable before vacuuming the thermoset material, and the mold may be heated to about 300 degrees Fahrenheit to about 350 degrees Fahrenheit after the thermoset material has assumed the shape of the mold to cure the thermoset material in the shape of the mold. Still further, the mold may be flash heated from about 100 degrees Fahrenheit substantially immediately or at least rapidly to about 300 degrees Fahrenheit. Also in this aspect, the thermoset material may be heated by the mold until a shape memory is imparted to the thermoset material. The thermoset material may be heated by the mold for about three minutes.

The thermoset material in this aspect of the disclosure may be a terpolymer elastomer. The terpolymer elastomer may be ethylene propylene diene monomer. The thermoset material, when cured, may have a thickness of about 0.1 inches to about 0.5 inches. A second thermoset material may be heat cured onto the cured thermoset material.

Also in this aspect of the disclosure, the mold may include a first surface configured for contact shaping the thermoset material and an opposing second surface, and further include heating at least the first surface prior to vacuuming the thermoset material thereon. The second surface may also be heated.
Still further, the mold may be cooled after heating to prepare the mold more quickly for a subsequent process.

Further in this aspect, a complementary shaped roofing structure may be mated with the thermoset material while heating the mold. A complementary shaped roofing structure and the thermoset material may also be secured together.
For example, the roofing structure and the thermoset material may be secured together by heat, compression, an adhesive, a tape, a mechanical device, and by combinations of these and other devices and securement methods.

In another aspect of the disclosure, a method of vacuum-forming a roofing component of thermoset material includes providing a mold shaped as a roofing component; heating the mold to a first temperature; disposing a thermoset material about the mold; vacuuming the thermoset material to assume a shape of the mold; heating the mold to a second temperature greater than the first temperature, the thermoset material being cured by the heated mold while under vacuum. This aspect may incorporate many of the same or similar steps and components as summarized for the foregoing aspect.

In a further aspect of the disclosure, a roofing component system including a component made of thermoset material formed by a vacuum and heating process includes a thermoset material shaped and cured by a heated mold, the thermoset material being shaped as a roofing component by heating the mold for at least about three minutes at about 300 degrees Fahrenheit; a roofing structure attached to the roofing component-shaped thermoset material; and means for attaching the roofing structure to the roofing component-shaped thermoset material.
The means for attaching may be a ring, an adhesive, a tape, a screw, a rivet, a bolt and combinations of these and other attachment devices. This aspect may also incorporate many of the same or similar steps and components as summarized for the foregoing aspects.

In yet a further aspect of the disclosure, a method of vacuum-forming a roofing component of thermoset material includes providing a mold shaped as a roofing component; providing a thermoset material; heating the thermoset material; disposing the thermoset material about the mold; and vacuuming the thermoset material to assume a shape of the mold, the thermoset material being cured during heating, for example, for about three minutes. In this aspect, the heating may be performed by heating the mold and/or placing the mold and the thermoset material in a heating chamber and/or disposing a heating element proximate the mold and the thermoset material.

### BRIEF DESCRIPTION OF THE DRAWINGS

The above and other aspects and advantages of the present disclosure are apparent from the detailed description below in combination with the drawings, in which:

FIGURE 1 is a perspective view of a product according to an aspect of the disclosure;

FIGURE 2 is a perspective view of an embodiment of a mold according to an aspect of the disclosure;

FIGURE 3 is a perspective view of a thermoset material being positioned about the mold as in FIGURE 2;

FIGURE 4 is a perspective view of the thermoset material being vacuum heated about the mold as in FIGURE 2;

FIGURE 5 is perspective view of the thermoset material as in FIGURE 4 after being vacuumed and heat cured;

FIGURE 6 is a perspective view of the thermoset material as in FIGURE 5, particularly showing an attachment ring being used to connect a light dome to the thermoset material in accordance with a further aspect of the disclosure;

FIGURE 7 is a perspective view of the finished product as in FIGURE 1, particularly showing the product in use with flashing;

FIGURE 8 is a perspective view of a portion of the finished product similar to FIGURE 7, particularly showing a water diverting component according to another aspect the disclosure;

FIGURE 9 is a schematic view of a process line according to a further aspect of the disclosure; and

FIGURE 10 is a perspective view of the thermoset material being vacuumed about a mold similar to FIGURE 4, particularly showing alternative heating.

### DETAILED DESCRIPTION OF THE DISCLOSURE

Detailed reference will now be made to the drawings in which examples embodying the present disclosure are shown. The detailed description uses numerical and letter designations to refer to features of the drawings. Like or similar designations of the draWings and description have been used to refer to like or similar parts of various embodiments according the disclosure.

The drawings and detailed description provide a full and detailed written description of the disclosure and of the manner and process of making and using various embodiments, so as to enable one skilled in the pertinent art to make and use them, as well as the best mode of carrying out the disclosure. However, the examples set forth in the drawings and detailed description are provided by way of explanation of the disclosure and are not meant as limitations of the disclosure. The present disclosure thus includes any modifications and variations of the following examples as come within the scope of the appended claims and their equivalents.

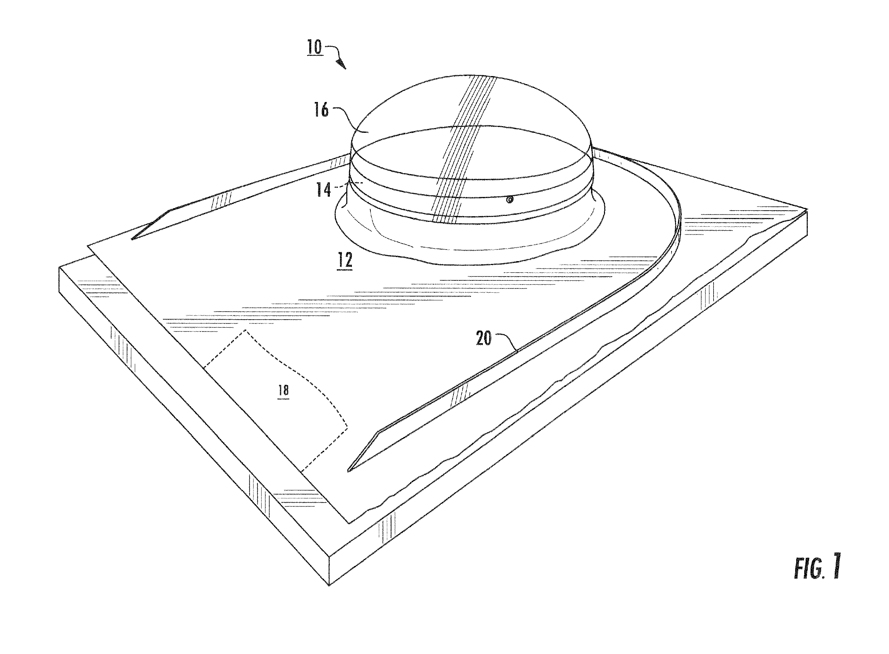

Turning now to the figures, FIGURES 1-9 show one embodiment of a roofing assembly broadly designated by the reference numeral 10. The roofing assembly 10 may generally include a vacuumed, heat cured thermoset material 12, an attachment ring 14, a skylight dome 16, and a flashing component 18. The roofing assembly 10 may be manufactured according to exemplary manufacturing processes as described in detail below.

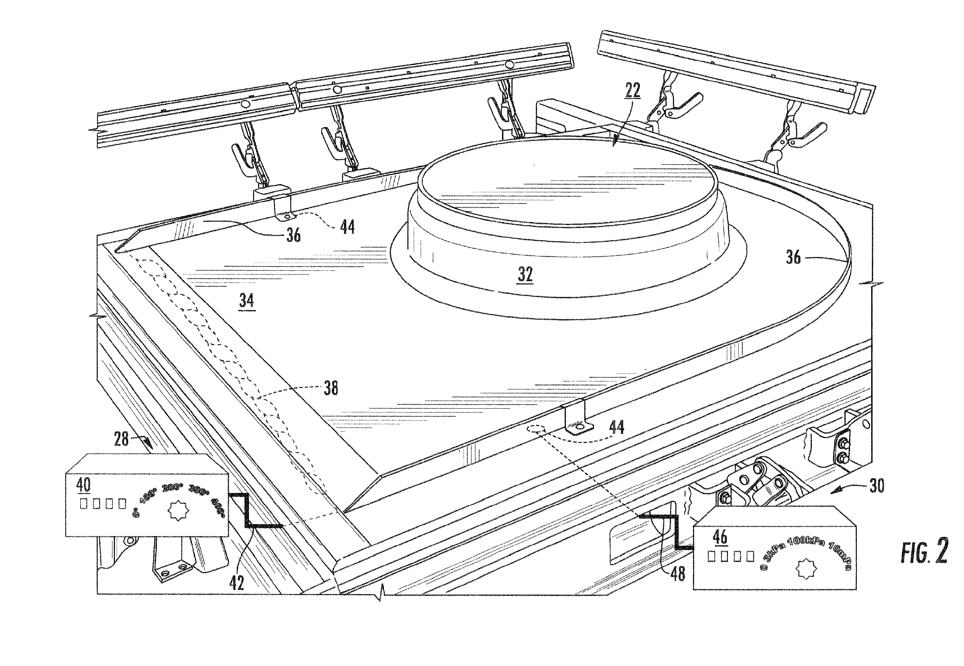

With particular reference to FIGURE 1, the thermoset material 12 may be ethylene propylene diene monomer (EPDM). As it name implies, EPDM is a terpolymer product consisting of three distinct monomers. The principle components are ethylene and propylene, and a flexible rubber matrix that forms when diene is added. EPDM is available reinforced or unreinforced and in a cured (vulcanized) or uncured (non-vulcanized) state. Vulcanized EPDM is most common but nonvulcanized EPDM is used according to the present embodiment unless otherwise stated. As shown in FIGURE 1, the thermoset material 12 is heat formed in this example in the shape of a tubular skylight. The attachment ring 14 secures the thermoset material 12 to a portion of the flashing 18 (shown partially in phantom for clarity), and the skylight dome 16 is attached to the attachment ring 14. The thermoset material 12 may also be heat formed with runoff guides 20 to direct rainwater and the like away from an area of the skylight dome 16. Finally, the entire assembly 10 is installed on a roof (not shown) to manage water runoff while providing ambient light to an interior of a house or building (not shown). The roofing assembly 10 may be better understood with reference to an exemplary method of manufacture and to FIGURES 2-8.

FIGURE 2 shows a generally male tool or mold 22, which includes a heating system 28 and a vacuum system 30. As shown, the mold 22 includes a male shaped projection or dome base 32 and a tray or plate 34 from which a perimeter or flange 36 projects. The dome base 32 and the flange 36 project their shapes into the thermoset material 12 upon completion of the exemplary process as will be described below. The skilled artisan will immediately appreciate that the mold 22 may be female shaped or have combinations of both male and female indentations and protrusions depending upon the desired shape of the cured thermoset material 12. Thus, the disclosure is not limited to the examples shown in the figures.

As further shown in FIGURE 2, the heating system 28 includes a plurality of heating coils or wires 38 (one shown in phantom for clarity) that are built into the mold 22 or may be located above, around, or in different portions of the maid 22 to provide heat for curing the thermoset material 12. In this example, the coils 38 are connected to a controller 40 via an electrical connection or wire 42. The controller 40 may be a computer or other device having controls by which an operator may heat the coils 38 to at least about 350 degrees Fahrenheit for at least about three minutes to cure the thermoset material 12 as described further below. Also discussed further below, the controller 40 may be configured to flash heat to a desired working temperature substantially instantaneously to avoid waiting for the mold to heat to a desired temperature over a gradual period. Further, the controller 40 may be configured to cool or chill the mold 22 rapidly in order to remove the cured thermoset material 12 and to prepare other raw thermoset material for a subsequent curing process. Stated another way, the controller 40 may be configured to chill the mold 22 to increase process efficiency. Although the mold 22 is heated by coils 38 in turn heating the material 12 in this example, the skilled artisan will appreciate that the material 12 may be heated using other arrangements, such as by conduction chambers, radiation and the like as described further herein and is not limited to the example shown in FIGURE 2.

FIGURE 2 also shows that the vacuum system 30 includes a controller 46 that is in communication with a plurality of apertures 44 (one shown in phantom for clarity) via respective connection lines 48. As shown, the controller 46, which also may be a computer similar to the controller 40 or may be a unitary system with the controller 40, is used to control vacuum pressure in order to vacuum the thermoset material 12 onto the mold 22. The controller 46 is substantially robust to vacuum a thermoset material having thicknesses of over about 0.25 inches (∼250 mils or ∼6.35 millimeters) without needing to preheat such thicker thermoset material. Additionally, or alternatively, the thermoset material 12, if over 0.25 inches thick, may be preheated to about 100 degrees Fahrenheit to be more pliable for positioning over the mold 22 for easier vacuuming onto the mold 22 by the controller 46.

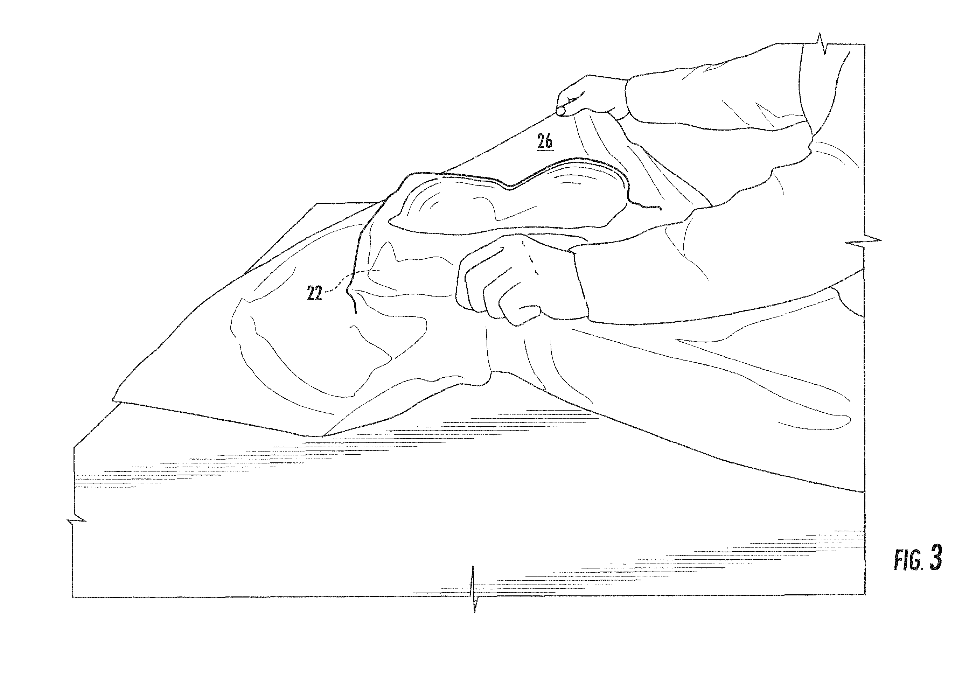

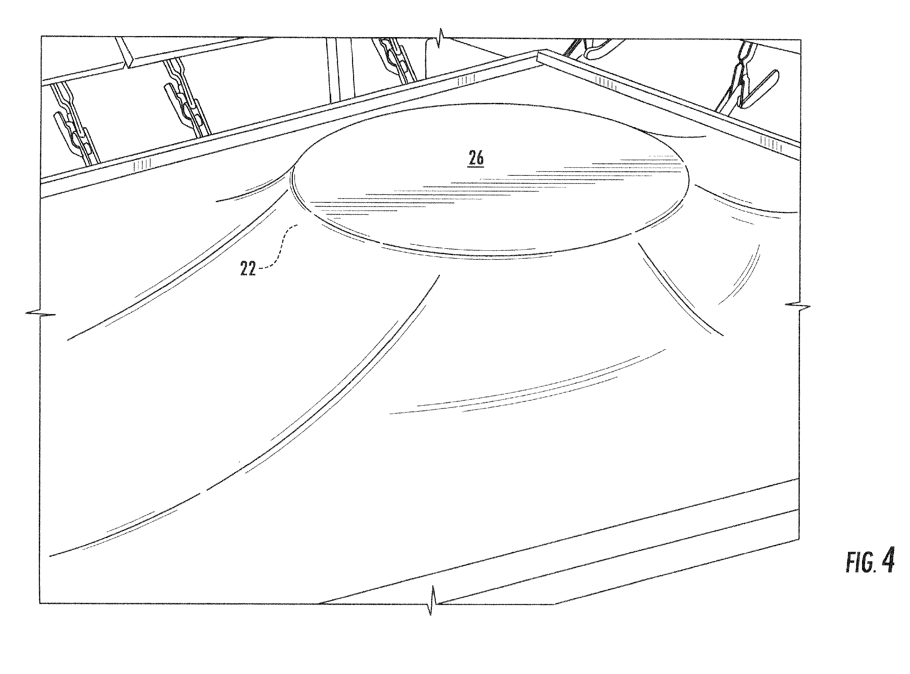

Turning now to FIGURES 3 and 4, an unvulcanized or raw sheet of thermoset material 26 is positioned about or over the mold 22 (indicated by phantom lead lines 22). As used herein, about and over may mean proximate, adjacent, on or in, depending upon the configuration of the maid 22. FIGURE 4 particularly shows the thermoset material 26 in position over the mold 22 being vacuum-set by the vacuum controller 46.

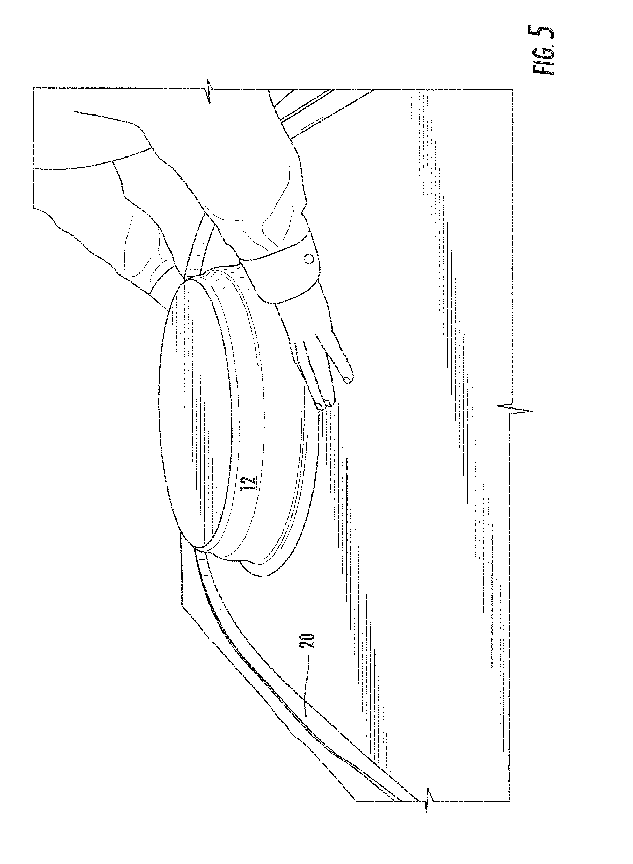

Once the thermoset material 26 is vacuum formed about the maid 22 such that the thermoset material 26 assumes the shape of the maid 22 as introduced above, the heat controller 40 heats the coils 38 to at least about 300 to 350 degrees Fahrenheit to heat the thermoset material 26 for at least about three minutes. As shown in FIGURE 5, the thermoset material 12 becomes cured to shape at this temperature at the end of three minutes. Thus, in FIGURE 5 the thermoset material 26 has become the cured thermoset material 12 introduced above. Also shown in FIGURE 5, the runoff guides 20 have been formed in the thermoset material 12 in a complementary shape to the flanges 36 of the mold 22 and a shoulder 24 is formed by the male shaped dome base 32.

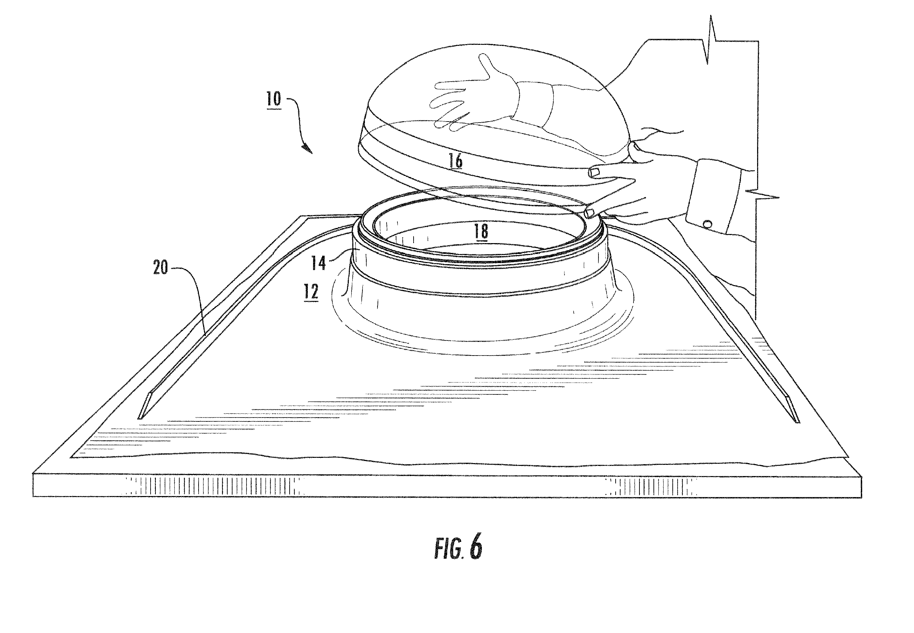

Turning to FIGURE 6, the roofing assembly 10 is shown in a final assembly stage. As shown, the attachment ring 14 is slipped over the shoulder 24 formed in the thermoset material 12. The shoulder 24 and the ring 14 mate over a portion of the flashing 18, and the ring 14 is connected to the thermoset material 12 and to the flashing 18 by screws, rivets, adhesives and the like. Further, the ring 14 may be configured as a tension ring to squeeze against the thermoset material 12 and the flashing 18 to provide an additional sealing feature. FIGURE 6 also shows that the skylight dome 16 is placed on the attachment ring 14 also by screws, adhesives and the like.

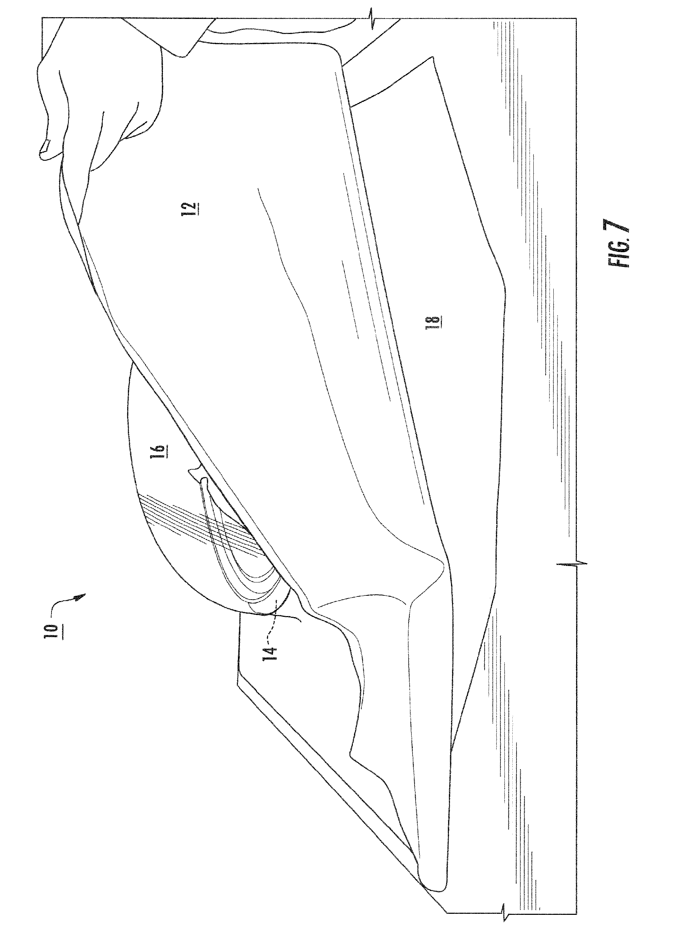

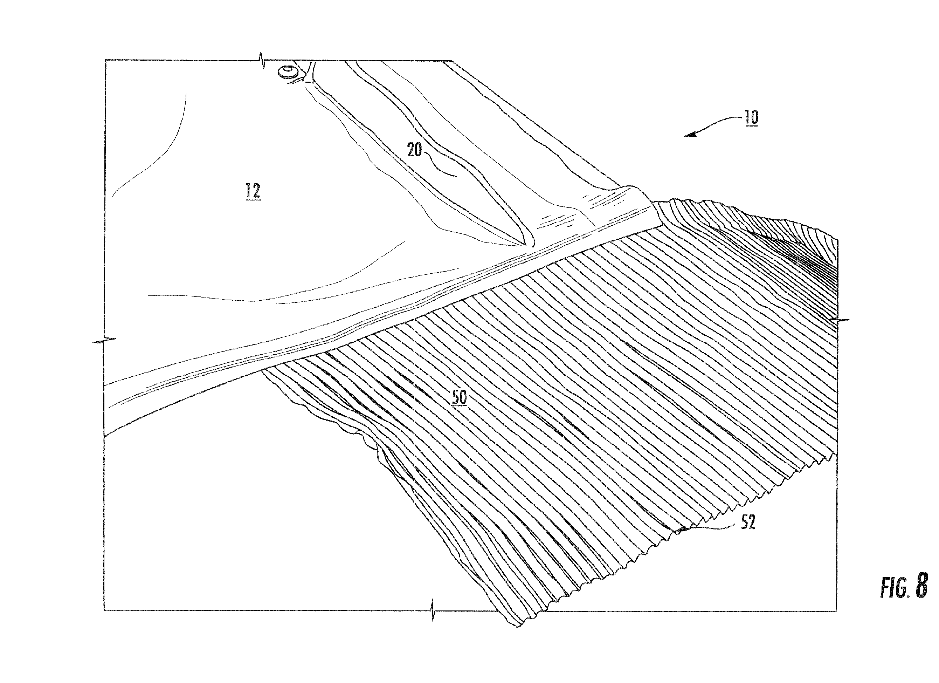

With reference to FIGURES 7 and 8, an underside of the themoset material 12 is preferably complementary in shape to the flashing 18. FIGURE 8 particularly shows a section of the thermoset material 12 and the runoff guides 20 positioned with a runoff sheet 50 having a plurality of ridges or dimples 52. As shown, the runoff sheet 50 may also include EPDM and may be heat cured or adhered to the thermoset material 12 for permanent attachment with the thermoset material 12. The roofing assembly 10 of FIGURE 8 may then be installed on a roof for the thermoset material 12 to manage water runoff from around the installation point of the roofing assembly 10. More particularly, the runoff guides 20 and the ridges 52 will direct the water down a roof slope such that the water does not pool in or around the area of the roofing assembly 10.

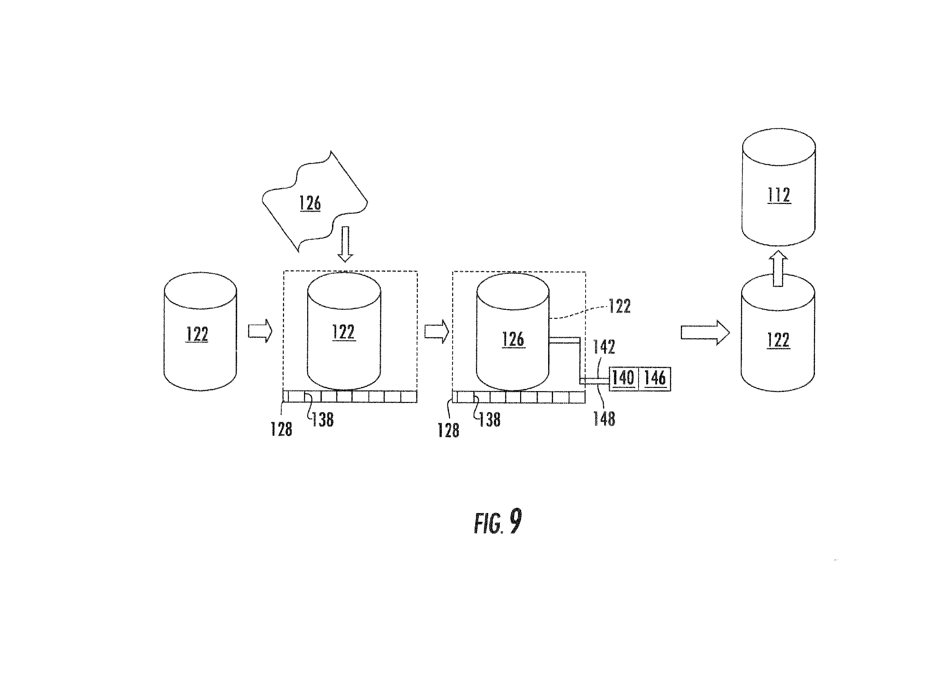

Turning now to another embodiment according to the disclosure as shown in FIGURE 9, another mold 122, which in this example is shaped as a tube or tubular skylight component, is positioned in a chamber 128 (shown partially in phantom for clarity) for heating the mold 122 and a sheet of uncured thermoset material 12. Many components and elements of the process shown in FIGURE 9 are similar to the foregoing embodiments and reference is made to the foregoing embodiments to provide an enabling disclosure for like or similar components not expressly discussed below.

As shown in FIGURE 9, the chamber 128 may have a plurality of coils 138 that are attached to or around the mold 122 or may be within walls, floors and ceilings of the chamber 128 in order to heat the thermoset material 126 to a curing temperature, such as about 300 to about 350 degrees Fahrenheit. As shown, the thermoset material 126 is positioned in, over or about the mold 122. Similar to the previous discussion, if the thermoset material 126 is of sufficient thickness to require additional pliability before positioning on the mold 122, the material 126 may be preheated using a heating controller 140 to about 100 degrees Fahrenheit to about 150 degrees Fahrenheit before positioning the thermoset material 126 on the mold 122. Once the thermoset material 126 is positioned on the mold 122 as shown in FIGURE 9, a vacuum controller 146 is activated to vacuum the thermoset material 126 into SUbstantially the same shape of the mold 122. At this stage, the temperature controller 140 may be activated to bring an ambient or slightly elevated temperature of the thermoset material 126 up to at least about 300-350 degrees Fahrenheit for at least about three minutes in order to cure or set the thermoset material 126 into the shape of the mold 122. The mold 122 may then be rapidly flash cooled or chilled by the controller 140 in order to remove the thermoset material 112 more quickly from the mold 122 without having to wait for the cured thermoset material 112 to cool down; thus expediting a subsequent process as shown in FIGURE 9.

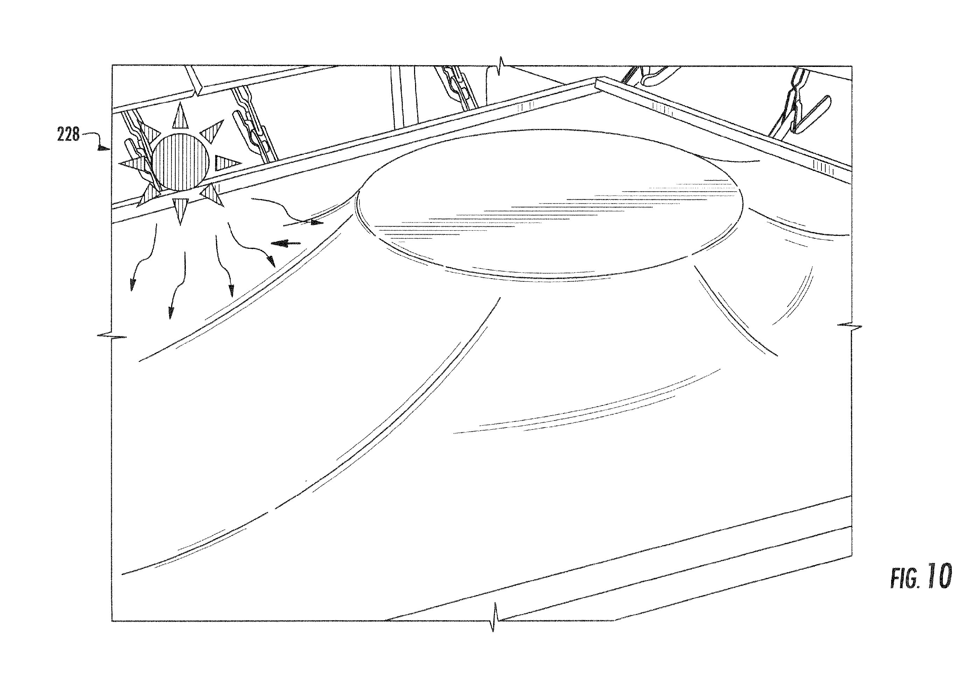

A further embodiment similar to aspects shown in FIGURES 2 and 9 is shown in FIGURE 10. In this aspect of the disclosure, a heating process includes one or more heat lamps 228 disposed near the thermoset material 226 as it is being vacuumed onto the mold 222. As shown, the heating system 228 emits heat, shown schematically in ray forms 238 to bring the thermoset material 226 up to about 350 degrees Fahrenheit for about three minutes to set the thermoset material 226 in the shape of the mold 222.

Further embodiments comprising the following:
A method of vacuum-forming a roofing component of thermoset material, the method comprising:
   - providing a mold shaped as a roofing component;
   - heating the mold;
   - disposing a thermoset material about the mold; and
   - vacuuming the thermoset material to assume a shape of the mold, the thermoset material being cured by the heated mold.
The method wherein the mold is a male-shaped mold or a female-shaped mold.
The method wherein the roofing component is a skylight, a tube or a flashing component.
The method wherein the mold is heated to about 300 degrees Fahrenheit to about 350 degrees Fahrenheit.
The method further comprising heating the thermoset material to about 100 degrees Fahrenheit to about 150 degrees Fahrenheit to render the thermoset material pliable before vacuuming the thermoset material, the mold being heated to about 300 degrees Fahrenheit to about 350 degrees Fahrenheit after the thermoset material has assumed the shape of the mold to cure the thermoset material in the shape of the mold.
The method further comprising flash heating the mold from about about 100 degrees Fahrenheit to about 300 degrees Fahrenheit.
The method wherein the thermoset material is heated by the mold until a shape memory is imparted to the thermoset material.
The method wherein the thermoset material is heated by the mold for about three minutes.
The method wherein the thermoset material is a terpolymer elastomer.
The method wherein the terpolymer elastomer is ethylene propylene diene monomer.
The method wherein the thermoset material, when cured, has a thickness of about 0.1 inches to about 0.5 inches.
The method wherein the mold has a first surface configured for contact shaping the thermoset material and an opposing second surface, and further comprising heating at least the first surface prior to vacuuming the thermoset material thereon.
The method further comprising heating the second surface.
The method further comprising cooling the mold.
The method further comprising mating a complementary shaped roofing structure with the thermoset material while heating the mold.
The method further comprising securing a complementary shaped roofing structure and the thermoset material together.
The method wherein the roofing structure and the thermoset material are secured together by heat, compression, an adhesive, a tape, a mechanical device and combinations thereof.
The method further comprising heat curing a second thermoset material onto the cured thermoset material.
A method of vacuum-forming a roofing component of thermoset material, the method comprising:
   - providing a mold shaped as a roofing component;
   - heating the mold to a first temperature;
   - disposing a thermoset material about the mold;
   - vacuuming the thermoset material to assume a shape of the mold; heating the mold to a second temperature greater than the first temperature, the thermoset material being cured by the heated mold while under vacuum.
The method wherein the first temperature is about 100 degrees Fahrenheit to about 150 degrees Fahrenheit to render the thermoset material pliable before vacuuming the thermoset material, and the second temperature is about 300 degrees Fahrenheit to about 350 degrees Fahrenheit to cure the thermoset material in the shape of the mold.
The method wherein the mold is heated at the second temperature for about three minutes.
The method further comprising inserting a complementary shaped roofing structure in the mold and mating the thermoset material therewith while heating the mold at the second temperature.
A roofing component system including a component made of thermoset material formed by a vacuum and heating process, the roofing component system comprising:
   - a thermoset material shaped and cured by a heated mold, the thermoset material being shaped as a roofing component by heating the mold for at least about three minutes at about 300 degrees Fahrenheit;
   - a roofing structure attached to the roofing component-shaped thermoset material; and means for attaching the roofing structure to the roofing component-shaped thermoset material.
The component system wherein the thermoset material is a terpolymer elastomer.
The roofing component system wherein the roofing structure is a tubular skylight or a flashing component.
The roofing component system wherein the means for attaching is selected from the group consisting of a ring, an adhesive, a tape, a screw, a rivet, a bolt and combinations thereof.
A method of vacuum-forming a roofing component of thermoset material, the method comprising:
   - providing a mold shaped as a roofing component;
   - providing a thermoset material;
   - heating the thermoset material;
   - disposing the thermoset material about the mold; and
   - vacuuming the thermoset material to assume a shape of the mold, the thermoset material being cured during heating.
The method wherein the thermoset material is heated to about 300 degrees Fahrenheit to about 350 degrees Fahrenheit.
The method wherein the thermoset material is heated for about three minutes.
The method wherein the heating is performed by selecting from the group consisting of heating the mold, placing the mold and the thermoset material in a heating chamber, disposing a heating element proximate the mold and the thermoset material, and combinations thereof.

While preferred embodiments of the disclosure have been shown and described, those skilled in the art will recognize that other changes and modifications may be made to the foregoing examples without departing from the scope and spirit of the invention. For instance, dimensions such as material thicknesses can be changed for various components. Likewise, thermoset materials can be used to manufacture the products described herein. It is intended to claim all such changes and modifications as fall within the scope of the appended claims and their equivalents.

## Claims

1. A method of vacuum-forming a roofing component of thermoset material, the method comprising:
- providing a mold shaped as a roofing component;
- heating the mold;
- disposing a thermoset material about the mold; and
- vacuuming the thermoset material to assume a shape of the mold, the thermoset material being cured by the heated mold.

2. The method as in claim 1, wherein the mold is a male-shaped mold or a female-shaped mold.

3. The method as in Claim 1, wherein the roofing component is a skylight, a tube or a flashing component.

4. The method as in Claim 1, wherein the mold is heated to about 300 degrees Fahrenheit to about 350 degrees Fahrenheit.

5. The method as in Claim 4, further comprising heating the thermoset material to about 100 degrees Fahrenheit to about 150 degrees Fahrenheit to render the thermoset material pliable before vacuuming the thermoset material, the mold being heated to about 300 degrees Fahrenheit to about 350 degrees Fahrenheit after the thermoset material has assumed the shape of the mold to cure the thermoset material in the shape of the mold.

6. The method as in Claim 5, further comprising flash heating the mold from about about 100 degrees Fahrenheit to about 300 degrees Fahrenheit.

7. The method as in Claim 1, wherein the thermoset material is heated by the mold until a shape memory is imparted to the thermoset material.

8. The method as in claim 1, wherein the thermoset material is a terpolymer Elastomer, for instance ethylene propylene diene monomer.

9. The method as in Claim 1, further comprising mating a complementary shaped roofing structure with the thermoset material while heating the mold.

10. The method as in Claim 1, further comprising securing a complementary shaped roofing structure and the thermoset material together.

11. A roofing component system including a component made of thermoset material formed by a vacuum and heating process, the roofing component system comprising:
- a thermoset material shaped and cured by a heated mold, the thermoset material being shaped as a roofing component by heating the mold for at least about three minutes at about 300 degrees Fahrenheit;
- a roofing structure attached to the roofing component-shaped thermoset material; and means for attaching the roofing structure to the roofing component-shaped thermoset material.
